# EUROPEAN PATENT SPECIFICATION

(11) **EP 0 549 065 B1**
(45) Date of publication and mention of the grant of the patent: **22.05.1996**
(21) Application number: 92204000.1
(22) Date of filing: 17.12.1992
(51) Int. Cl.: A01M 21/04, B05B 9/08

(54) **Application device for the application of a fluid to crops**
Auftragsvorrichtung zum Auftragen von einer Flüssigkeit auf Kulturen
Dispositif d'application pour l'application d'un fluide à des cultures

(30) Priority: 20.12.1991 NL 9102153
(43) Date of publication of application: 30.06.1993
(73) Proprietor: Sieger, Johan Gerhard Willem, NL-1181 NT Amstelveen (NL)
(72) Inventor: Sieger, Johan Gerhard Willem, NL-1181 NT Amstelveen (NL)
(74) Representative: de Bruijn, Leendert C.

(56) References cited:
- WO-A-91/14363
- FR-A- 961 558
- GB-A- 2 143 153
- US-A- 2 719 753
- US-A- 2 789 396
- US-A- 4 409 755
- US-A- 4 550 526
- US-A- 4 727 678

## Description

The invention relates to an application device according to the introductory part of Claim 1.

Such an application device is known from French patent publication 961558. In that case the connecting means comprise a support which projects forwards from the frame, and to which the lance is hinged. In order to obtain a balance relative to the hinge point, a spring may be provided between the lance and the frame. When applying fluid, the user has to spray the fluid over the crop in question in an up and down movement. In the course of this, fluid is applied to the crop by sprinkling. In the case of the device according to this French patent, if the application is to be from left to right, the user has to walk back and forth over the field constantly turning his body.

In recent years there has been an increasing awareness that the application of large quantities of chemicals to crops is undesirable. Efforts are therefore being made to limit the quantity of crop protection chemicals. One way in which this can be achieved is the selective application of chemicals to crops. In other words, fluid is applied only at certain points on the crop through contact with the lance.

Such a device for applying a fluid locally is known from US Patent Specification 4,409,755. In the case of the device described therein the storage means for fluid are provided inside the lance. The duration of contact between the application device and the plant is longer in the case of wiping than in the case of dabbing. With dabbing a droplet is transferred to the plant on the first light touch. The application device is wetter in this case than in the case of wiping, but it must not drip. Both methods are particularly suitable if crop protection chemicals have to be delivered selectively in small quantities. If, for example, potatoes and beet or cereals are being grown in succession, there is the problem that if in the phase between lifting of the potatoes and harvesting of the next crop remaining potatoes grow, which have to be removed as weeds. In particular, if no frost occurs in such a period, the problem is a considerable one, because a large number of potato plants then come to germination.

Although the device according to US Patent Specification 4,409,755 is effective for dabbing or wiping some plants, this device cannot be used in practice for larger agricultural acreages. If the user has to carry the weight of the device in question all day, that person is going to become very tired as a result. Besides, the hockey stick shape of this known application device means that the operator tends to walk bent and to move along turning his body. Owing to the short working distance, the field of vision has to be adjusted constantly to look for the plants yet to be destroyed. Problems also arise in the metering of the chemical to be applied. These problems are due in particular to the fact that the whole unit has to be liquid-tight and air-tight, except at the application end, in order to prevent spilling. Use of the fluid and temperature differences produce troublesome pressure differences in the lance. In order to prevent dripping, the application device must not be too wet, which would make dabbing virtually impossible in the case of this device. The contents of the lance are limited by the diameter which can be handled and the weight of the lance.

The object of the present application is to avoid these disadvantages.

This object is achieved in the case of the device described above by the characterising measures according to Claim 1. These make it possible to move the end of the lance with the application means not only up and down in the vertical direction, but also in the horizontal direction. It is therefore not necessary for the user to twist his spine, while an accurately applied quantity of fluid can still be metered onto the crop from left to right. With the device according to the invention it is possible, with a flick of the wrist while still moving, to move with the application means flat along the crop or over the crop, and such a movement can be carried out either in the forward direction or from left to right. Since the hinge point of the lance where the connecting means are fixed to it lies at a considerable distance before the user, the latter can concentrate well on the application means while moving over the field. Although the fastening of the connecting means to the frame can lie lower down than the fastening to the lance, the reverse of this is preferable. In the latter case the connecting means are subjected only to tensile stress, and can be formed by a cable.

Although it is possible to set the distance between the frame and the lance at a fixed value, determined by the connecting means, it is preferable that this distance should be variable during use. Depending on all kinds of circumstances, the user of the application device can regulate the mutual position of the lance and frame. Spring balancing means are preferably used for this purpose. Such spring balancing means are generally known in the prior art, for example for carrying cables, hoses and the like.

The connecting means, and in particular the spring balancing means, can in this case be fixed to the frame, so that they pivot in the horizontal plane.

Although the invention can be used for any method of application in which accurate metering and thus a low use of all kinds of fluids on crops are important, it can be used advantageously if the application means are designed as an element which applies fluid through contact. It can be equipped to achieve both dabbing and wiping of the crops.

Apart from the up and down movement, accurate positioning of the application means in the horizontal direction is important. For a more accurate and quicker control, according to the invention provision is made for a rod to be fixed to the lance, while both the lance and the rod are provided with handles. Very accurate control both in the vertical and in the horizontal direction can be achieved while the user stands upright, in other words, relieving the pressure on his back and neck.

In order to obtain the optimum position, the rod described above is preferably fixed in a hinged and sliding manner on the lance.

By fitting them on the frame, the storage means can be made of greater capacity, so that it is no longer necessary to replenish them with fluid in the field. This is important for crop protection chemicals in particular, where spillage can have very undesirable consequences for the piece of ground to be worked. In addition, it prevents loss of time, and operating reliability is not jeopardised through contamination during the filling up of the fluid. For the repair of a fault, water is often needed, and it is generally not directly available in the field.

For accurate control of the fluid to the application means, metering means can be disposed in the feed-through means near the storage means.

The quantity of fluid to be metered depends on the working pace, the quantity of fluid to be applied per plant, the density of the plants to be controlled, and the weather conditions. If, for example, it is windy and the air is dry, some of the fluid will evaporate without ever reaching the plant.

For control of the amount of fluid going through, according to another advantageous embodiment of the invention a droplet chamber system is present in the feed-through means. Where the plants to be controlled are dense, and there is thus an uninterrupted pace of dabbing movements, the user can be provided visually with a setting of the application device by means of the droplet rate in the droplet chamber. Combined with the movement up or down of the application means, an accurate metering can be obtained.

The invention will be explained in greater detail below with reference to an example of an embodiment shown in the drawing. In the drawings:
Fig. 1 shows in perspective view the application device with user, in a first position;
Fig. 2 shows the device according to Fig. 1, in the dabbing position; and
Fig. 3 shows the application device according to the preceding figures, without the user.

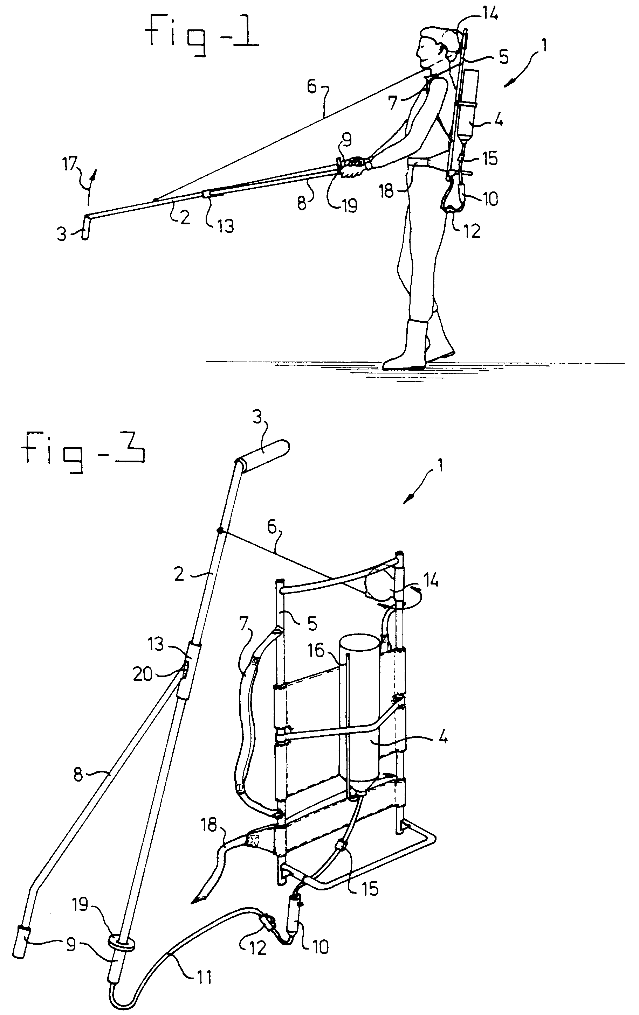

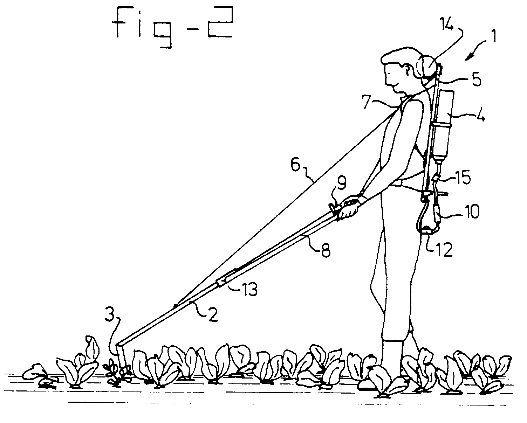

The application device shown in the figures comprises three main parts, i.e. carrying means, indicated in their entirety by 1, connecting means, here in the form of wire 6, and a lance 2. The end of lance 2 is provided with application means 3, for example a foam rubber element. Wire 6 is connected, on the one hand, to lance 2 and, on the other, to frame 5 of the carrying means. This connection takes place by means of a spring balance 14. As can be seen from Fig. 3, this spring balance 14 is hinged in the horizontal plane to the frame 5. This spring balance ensures an essentially constant tensioning of wire 6. Rod 8 is connected in a sliding manner to lance 2 by means of sleeve 13 and hinge 20. Both lance 2 and rod 8 are provided with handles 9 at the ends. The handle of lance 2 has at the front a collar, by means of which the counterpressure is absorbed through wire 6 and spring balance 14, with the result that pinching with the fingers becomes unnecessary. This means that the spring balance can be adjusted depending on the most commonly used working position. A line 11, connected in a manner not shown in any further detail to application means 3, is guided through lance 2. Line 11 contains a fine adjustment valve 12, a droplet chamber 10, and a main regulating valve 15. Line 11 is finally connected to tank 4. Tank 4 also has opening out into it a venting hose 16, which ensures a constant pressure in tank 4. Frame 5 is also provided with carrying straps 7 and a hip belt 18, which are to prevent the frame 5 from being pulled askew and tilting through uneven loading. The device described above can be used for dabbing on selective weed-killers such as glyphosate. Accurate dosing, which must take place in the shortest possible time, is required here.

As can be seen from Figs. 1 and 2, the weight of the lance 2, the application means fixed thereto and rod 8 are essentially carried by means of wire 6 by carrying means 1. The result is that the user can concentrate fully on the place of dabbing or wiping without becoming tired himself from carrying the device. It also means that the device can be made sturdier, which improves its service life and reliability. Fig. 1 shows the device in a middle position. Starting from this position and moving upwards in the direction of arrow 17, the mouth of the line 11 at the application means 3 will go into container 4 above the fluid level, so that without closing main valve 15 or fine adjustment valve 12 no further fluid is supplied to the crop. The backward pressure on lance 2 by means of wire 6 and spring balance 14 is compensated for by the forward pressure of the weight of the arms, which are held slightly backwards. The lance 2 presses with the collar 19 of the handle 9 against thumb and forefinger. This means that there is no need to pinch with the fingers in order to hold the lance in this position. In this position the weight in the hand is less than 200 grammes. The droplet chamber 10 will run full in this position after some time. When there is a movement downwards, fluid will be delivered by gravity to application means 3, which thereby retain sufficient moisture for attack of the next plant. This fluid flow can be regulated in the field, both for incidental and continuous dabbing, by means of fine adjustment valve 12, but the possibility of metering the fluid by raising and lowering the lance 2 is essential in the case of an incidental position of the plants to be controlled. The coarse adjustment can be controlled by means of a droplet chamber system 10, such as that known in the prior art for, for example drip systems. In the case of continuous dabbing, fine adjustment valve 12 can also be controlled in the field by means of the droplet chamber system. In the case of incidental dabbing the droplet chamber runs full, and that cannot happen. Fine adjustment valve 12 can be used for adjusting to the density of the position of the plants to be controlled, and to the weather conditions, i.e. changing wind speed or adjustment to the amount of sunshine.

The device described above is suitable for wiping by turning lance 2 between thumb and forefinger. However, dabbing is used if possible, for dabbing works much faster. Through the particularly accurate metering of the fluid, which can be influenced, on the one hand, by the various valves, and on the other, by the positioning of the application means in a high position, it is possible to use this device for dabbing. Dabbing is not only faster, but also safer than wiping, in particular in poor weather conditions. In the case of dabbing the risk that the wrong plant will be touched is much lower than in the case of wiping.

Another advantage of dabbing over wiping is that through the very slight contact with the plant the application means 3 do not soil, which prevents clogging. Any entrained dirt is flushed off again at the next plant. The wear of the application means 3 is also much lower in the case of dabbing than in the case of wiping.

The device described above is adjustable in a very simple manner to the height of different persons. It has been found that, due to the fact that the weight carried by hand is considerably lower, the productivity of the user can be increased considerably. An upright posture is promoted by the carrying means. Optimum use of the working range of lance 2 is also promoted by them. The weight of the carrying means and the liquid supply can also be placed in such a way that a certain balance with the lance is provided.

Although the invention is described above with reference to a preferred embodiment, it must be understood that numerous modifications can be made to it without going beyond the scope of the invention.

For example, it is possible to design the application means 3 in other ways known in the prior art. The same applies to lance 2 and rod 8 and the connecting means 6.

## Claims

1. Application device for the application of a fluid to crops, comprising a lance (2) which at one end lying near the crop during use is provided with application means (3) which by means of feed-through means (11) in the lance are connected to storage means (4), which storage means (4) are provided with a frame (5) for fastening to an operating person, while between the frame (5) and the lance (2) connecting means (6, 14) are present, which connecting means in the use position are connected to the lance (2) in such a way that they pivot in the vertical plane, characterised in that the lance (2) is provided with a handle (9) at the other end, which relative to the application means (3) lies at the other side of the hinge point with the connecting means, and the connecting means are designed also to permit a movement in the horizontal plane when in the use position.

2. Application device according to Claim 1, in which in the use position the fastening of the connecting means (6) to the frame (5) lies higher than the fastening to the lance (2).

3. Application device according to Claim 1, in which the connecting means (6) are variable in working length depending on the force exerted thereon.

4. Application device according to Claim 2, in which the connecting means comprise spring balancing means (14).

5. Application device according to one of the preceding claims, in which the connecting means are hinged to the frame (5) in such a way that they pivot at least in the horizontal plane.

6. Application device according to one of the preceding claims, in which the application means (3) comprise an element which applies fluid through contact.

7. Application device according to one of the preceding claims, in which the frame (5) is a back frame provided with strap means (7), (18).

8. Application device according to one of the preceding claims in which a rod (8) is fixed to the lance (2), wherein the lance (2) is provided with a collar (19).

9. Application device according to Claim 7, in which the rod (8) is fixed to the lance (2) in a pivoting (20), sliding (13) manner.

10. Application device according to one of the preceding claims, in which the storage means (4) are disposed with venting (16) on the frame (5).

11. Application device according to one of the preceding claims, in which metering means (12, 15) are provided between the storage means (4) and the feed-through means (11).

12. Application device according to one of the preceding claims, in which a droplet chamber system (10) is provided visibly in the feed-through means (11).

## Patentansprüche

1. Auftragsvorrichtung zum Auftragen einer Flüssigkeit auf Kulturen, mit einer Lanze (2), die an einem Ende, das bei Benutzung nahe der Kultur liegt, mit einer Auftragseinrichtung (3) versehen ist, die über eine Durchlaßeinrichtung (11) in der Lanze mit einer Vorratseinrichtung (4) verbunden ist, wobei die Vorratseinrichtung (4) einen Rahmen (5) zum Befestigen an einer Bedienungsperson aufweist, wobei zwischen dem Rahmen (5) und der Lanze (2) eine Verbindungseinrichtung (6, 14) vorgesehen ist, die in der Benutzungslage mit der Lanze (2) derart verbunden ist, daß sie in der vertikalen Ebene verschwenkbar ist, dadurch gekennzeichnet, daß die Lanze (2) am anderen Ende mit einem Handgriff (9) versehen ist, der relativ zur Auftragseinrichtung (3) an der anderen Seite der Gelenkstelle mit der Verbindungseinrichtung liegt, wobei die Verbindungseinrichtung ferner so ausgebildet ist, daß sie in der Benutzungslage eine Bewegung in der Horizontalebene ermöglicht.

2. Auftragsvorrichtung nach Anspruch 1, wobei in der Benutzungslage die Befestigung der Verbindungseinrichtung (6) mit dem Rahmen (5) höher liegt als die Befestigung mit der Lanze (2).

3. Auftragsvorrichtung nach Anspruch 1, wobei die Arbeitslänge der Verbindungseinrichtung (6) in Abhängigkeit von der darauf ausgeübten Kraft variabel ist.

4. Auftragsvorrichtung nach Anspruch 2, wobei die Verbindungseinrichtung eine Federausgleichseinrichtung (14) aufweist.

5. Auftragsvorrichtung nach einem der vorstehenden Ansprüche, wobei die Verbindungseinrichtung derart am Rahmen (5) angelenkt ist, daß sie zumindest in der Horizontalebene verschwenkbar ist.

6. Auftragsvorrichtung nach einem der vorstehenden Ansprüche, wobei die Auftragseinrichtung (3) ein Bauelement aufweist, das aufgrund eines Kontakts ein Fluid aufträgt.

7. Auftragsvorrichtung nach einem der vorstehenden Ansprüche, wobei der Rahmen (5) ein mit Bändern (7, 18) versehener Rückenrahmen ist.

8. Auftragsvorrichtung nach einem der vorstehenden Ansprüche, wobei an der Lanze (2) ein Stab (8) befestigt ist, wobei die Lanze mit einer Manschette (19) versehen ist.

9. Auftragsvorrichtung nach Anspruch 7, wobei der Stab (8) an der Lanze (2) über ein Gelenk (20) und eine Gleitführung (13) verbunden ist.

10. Auftragsvorrichtung nach einem der vorstehenden Ansprüche, wobei die Vorratseinrichtung (4) mit einer Gasabfuhr (16) am Rahmen (5) versehen ist.

11. Auftragsvorrichtung nach einem der vorstehenden Ansprüche, wobei zwischen der Vorratseinrichting (4) und der Durchlaßeinrichtung (11) Meßeinrichtungen (12,15) angeordnet sind.

12. Auftragsvorrichtung nach einem der vorstehenden Ansprüche, wobei in der Durchlaßeinrichtung (11) ein Tropfenkammer-System (10) sichtbar angeordnet ist.

## Revendications

1. Dispositif d'application destiné à l'application d'un fluide à des cultures, comprenant une lance (2) qui, en son extrémité située près des cultures pendant l'utilisation, est dotée de moyens d'application (3) qui sont raccordés, par un moyen de passage (11) situé dans la lance, avec des moyens de stockage (4), lesquels moyens de stockage (4) comportent une armature (5) de fixation à une personne effectuant le travail, tandis que des moyens de liaison (6, 14) sont situés entre l'armature (5) et la lance (2), moyens de liaison qui, dans la position d'utilisation, sont fixés à la lance (2) de manière à pivoter dans le plan vertical,
caractérisé en ce que la lance (2) comporte une poignée (9) en l'autre extrémité qui se trouve, par rapport aux moyens d'application (3), de l'autre côté du point d'articulation des moyens de liaison, et les moyens de liaison sont conçus pour permettre aussi un déplacement dans le plan horizontal quand on est dans la position d'utilisation.

2. Dispositif d'application selon la revendication 1 dans lequel, dans la position d'utilisation, la fixation des moyens de liaison (6) à l'armature (5) est située plus haut que la fixation à la lance (2).

3. Dispositif d'application selon la revendication 1, dans lequel les moyens de liaison (6) ont une longueur utile variable en fonction de la force qu'on exerce sur eux.

4. Dispositif d'application selon la revendication 2, dans lequel les moyens de liaison comprennent un moyen (14) d'équilibrage par ressort.

5. Dispositif d'application selon l'une quelconque des précédentes revendications, dans lequel les moyens de liaison sont articulés sur l'armature (5) de façon à pivoter au moins dans le plan horizontal.

6. Dispositif d'application selon l'une quelconque des précédentes revendications, dans lequel les moyens d'application (3) comprennent un élément qui applique du fluide par contact.

7. Dispositif d'application selon l'une quelconque des précédentes revendications, dans lequel l'armature (5) est une armature dorsale avec des moyens (7, 18) formant sangles.

8. Dispositif d'application selon l'une quelconque des précédentes revendications, dans lequel une barre (8) est fixée à la lance (2), la lance (2) étant pourvue d'un collier (19).

9. Dispositif d'application selon la revendication 7, dans lequel la barre (8) est fixée à la lance (2) de manière pivotante (20) et coulissante (13).

10. Dispositif d'application selon l'une quelconque des précédentes revendications, dans lequel les moyens de stockage (4) sont placés sur l'armature (5) avec un dispositif d'aération (16).

11. Dispositif d'application selon l'une quelconque des précédentes revendications, dans lequel des moyens de dosage (12, 15) sont placés entre les moyens de stockage (4) et le moyen de passage (11).

12. Dispositif d'application selon l'une quelconque des précédentes revendications, dans lequel un système (20) de chambre de goutte-à-goutte est placé de façon visible dans le moyen de passage (11).
